## Europäisches Patentamt
## European Patent Office
## Office européen des brevets

(19)

(11) Veröffentlichungsnummer: **0 005 480**
**A1**

(12) # EUROPÄISCHE PATENTANMELDUNG

(21) Anmeldenummer: 79101355.0

(22) Anmeldetag: 03.05.79

(51) Int. Cl.²: **G 01 N 27/12**
**H 01 L 7/00**

(30) Priorität: 16.05.78 DE 2821266

(43) Veröffentlichungstag der Anmeldung:
28.11.79 Patentblatt 79/24

(84) Benannte Vertragsstaaten:
DE FR GB IT NL

(71) Anmelder: SIEMENS AKTIENGESELLSCHAFT Berlin
und München
Postfach 261
D-8000 München 22(DE)

(72) Erfinder: Treitinger, Ludwig, Dipl.-Ing.
Klobensteiner Strasse 25
D-8000 München 90(DE)

(72) Erfinder: Köpl, Rupert
Steinkirchnerstrasse 7
D-8000 München 71(DE)

(72) Erfinder: Pink, Hans, Dr.
Possenhofener Strasse 38a
D-8130 Starnberg(DE)

(54) Gassensoren.

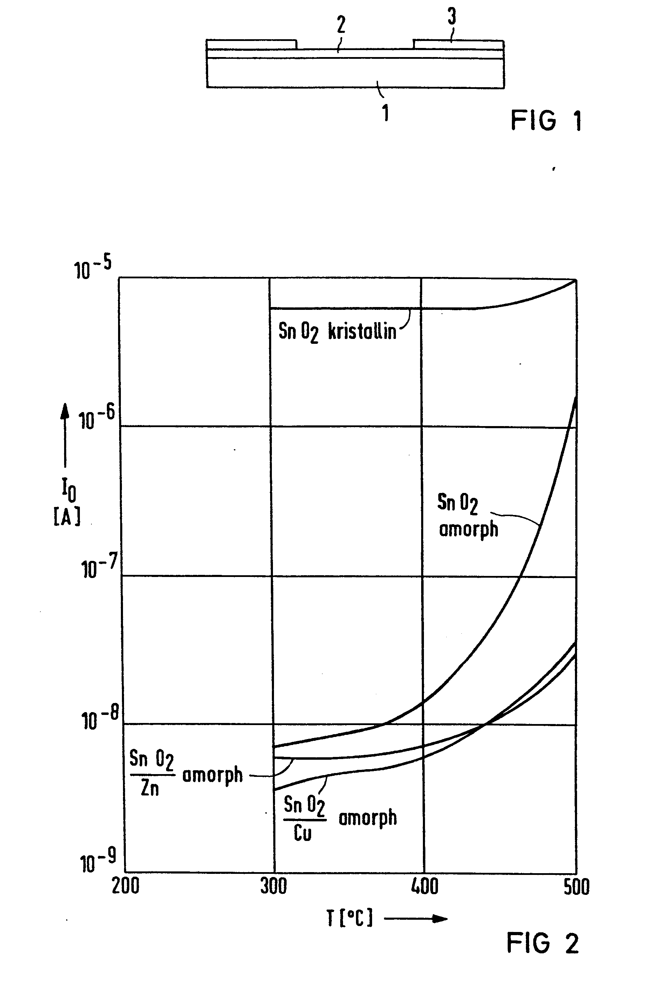

(57) Die Erfindung bezieht sich auf Gassensoren auf Basis von Metalloxid-Halbleitern, die sehr empfindlich und wenig temperaturabhängig sind. Die Erfindung sieht hierfür Gassensoren vor, bei denen der Metalloxid-Halbleiter auf dem Substrat (1) in Form einer amorphen Metalloxid-Halbleiter-Dünnschicht (2) vorliegt. Das Substrat kann amorph oder kristallin sein. Der Metalloxid-Halbleiter kann mindestens ein Dotierungselement enthalten. Erfindungsgemäße Gassensoren sind zum Nachweis und zur Bestimmung von verschiedenen Schadgasen wie z. B. CO, $C_nH_m$, $C_6H_6$ und insbesondere Äthanol in Luft und Abgasen geeignet. (Fig. 1)

FIG 1

EP 0 005 480 A1

SIEMENS AKTIENGESELLSCHAFT    Unser Zeichen
Berlin und München                VPA 78 P 7 0 4 7 EUR

Gassensoren

Die Erfindung betrifft Gassensoren auf der Basis von Metalloxid-Halbleitern.

Geräte und Einrichtungen zur Feststellung und quantitativen Bestimmung von Gasen und Dämpfen in der Luft werden in vielfacher Weise eingesetzt.

Das Funktionsprinzip des Halbleiter-Gassensors ist bekannt. Halbleiter-Gassensorren bestehen aus einem Stück eines Halbleitermaterials und mindestens zwei Elektroden, um die bei Adsorption eines Gases auftretende Änderung der elektrischen Leitfähigkeit messen zu können. Die Empfindlichkeit des Gassensors ist durch die relative Änderung der elektrischen Leitfähigkeit pro Einheit der Gaskonzentration in der Luft gegeben. Die in der technischen Literatur beschriebenen und im Handel erhältlichen Halbleiter-Gassensoren sind Volums-

Td 2 Dm / 27.4.1978

anordnungen aus kristallinem $SnO_2$ mit verschiedenen
Beimengungen wie $ZnO$, $Fe_2O_3$, $TiO_2$, $V_2O_5$, $MnO_2$, $WO_3$ und
$ThO_2$ in Form von Pillen bzw. Sinter- oder Preßkörpern.

Neben der vielfach zu geringen Empfindlichkeit dieser
Volumsanordnungen ist vor allem ihr Zeitverhalten als
entscheidender Nachteil zu nennen. Die von den Anwendern
geforderten Werte der Ansprech-, Anstiegs- und besonders
der Regenerationszeit können bis jetzt mit den erhältlichen Volumsanordnungen nicht erreicht werden. Während
Ansprech- und Anstiegszeit in dem Bereich von 1 bis 10
Sekunden (Extremwerte der Anstiegszeit bis 30 Sekunden)
liegen, werden für die Regenerationszeit Werte von etlichen Minuten bis sogar Stunden berichtet. Eine Erhöhung der Betriebstemperatur verbessert das Zeitverhalten, verkürzt jedoch drastisch die Lebensdauer der
Bauelemente.

Aufgabe der Erfindung sind Halbleiter-Gassensoren auf
der Basis von Metalloxid-Halbleitern, die hohe
Empfindlichkeit, kurze Ansprech-, Anstiegs- und Regenerationszeit sowie geringe Abhängigkeit von der Betriebstemperatur erbringen.

Diese Aufgabe wird erfindungsgemäß dadurch gelöst, daß
der Metalloxid-Halbleiter auf dem Substrat in Form einer
amorphen Dünnschicht vorliegt. Die amorphe Dünnschicht
hat vorzugsweise eine Dicke zwischen 0,1 und 10 µm.

Der Metalloxid-Halbleiter kann nur Kationen einer
einzigen Art enthalten, wie z. B. $SnO_2$, $In_2O_3$, $ZnO$.

Metalloxid-Halbleiter der allgemeinen Zusammensetzung
$A_xB_yO_z$, worin sowohl A als auch B Elemente aus der
Gruppe der Seltenen Erden wie Nd, Gd, Ho, Sm, Er, Yb,
Pr, Übergangselemente wie Zn, Fe, Co, Cu, Ag, Al, In und Edelmetalle wie Au, Pt, Pd und x, y und z die Anteile des jeweiligen Elementes sind, haben sich besonders bewährt. Geeignet sind z.B. $Cd_2InO_4$, $LaInO_3$, $NdInO_3$, $Sr_3In_2ReO_9$.

Gemäß weiterer Erfindung kann die amorphe Dünnschicht dotiert sein, wobei der Metalloxid-Halbleiter ein oder mehrere Dotierungselemente enthalten kann. Als Dotierungselemente sind die Übergangsmetalle, Edelmetalle und die Seltenen Erden geeignet wie z.B. Zn, Cu, Ag, La, Cd, Lu.

Das Substrat kann kristallin sein, beispielsweise $Al_2O_3$-Keramik. Ganz besonders günstige Werte werden mit amorphen Substraten erzielt wie z.B. Quarzglas.

Gassensoren gemäß der Erfindung zeigen hohe Empfindlichkeit, kurze Ansprech-, Anstiegs- und Regenerationszeit sowie geringe Abhängigkeit der Anzeige von der Betriebstemperatur.

Es wird mit Gassensoren gemäß der Erfindung eine große relative Leitfähigkeitsänderung erzielt, d.h. eine beachtliche Vergrößerung der Leitfähigkeit trotz kleinem Ausgangswert. Um in kristallinen Halbleitern eine kleine Ausgangsleitfähigkeit zu erreichen, ist entweder eine hohe Reinheit des Halbleitermaterials oder eine genaue dosierte "Gegendotierung" nötig, was jeweils mit hohen Kosten verbunden ist.

Bei der Verwendung dünner Schichten anstatt von Volumsanordnungen entfallen die, verglichen mit den Oberflächenreaktionen langsamen, Volums-Diffusions- und Reaktionsvorgänge.

Ein ganz wesentlicher Vorteil liegt weiter in der geringen Temperaturabhängigkeit. Im allgemeinen haben Halbleiter eine exponentielle Temperaturabhängigkeit der elektrischen Leitfähigkeit. Geringe Temperaturabhängigkeit bzw. Temperaturunabhängigkeit wird erhalten, wenn an dem Fermi-Niveau besetzte Energiezustände liegen. Bei kristallinen Halbleitern ist dieser Fall als "Entartung" bekannt, die Leitfähigkeit hat dann metallischen Charakter. Dies ist für Halbleiter-Gassensoren, die einen möglichst kleinen Grundwert der elektrischen Leitfähigkeit haben sollen, unbrauchbar.

Durch Verwendung von amorphen Halbleitern, deren Leitfähigkeit hauptsächlich durch Ladungsträger in lokalisierten Energiezuständen an der Fermikante geliefert wird, sind Halbleiter-Gassensoren mit kleinem Grundstrom, der wenig von der Betriebstemperatur abhängt, erhältlich.

Die Eigenschaften der Dünnschichten, darunter auch die Verteilung der elektrischen Leitfähigkeit auf die Teilleitfähigkeiten, hängen vom Ausgangsmaterial, dem Substrat, der Dotierung und von den Herstellungsbedingungen, z.B. der Substrattemperatur, ab.

Gassensoren gemäß der Erfindung können Verwendung finden zum Nachweis und zur Bestimmung von verschiedenen Schadgasen wie z.B. CO, $C_nH_m$ (Kohlenwasserstoffen), $C_6H_6$, Alkoholen, insbesondere Äthanol, Estern und Äthern in Luft und Abgasen.

Die Erfindung wird anhand der Darstellung eines Ausführungsbeispiels näher erläutert.
Es zeigt:

Fig. 1 einen Schnitt durch einen Dünnschichtgassensor,
Fig. 2 eine graphische Darstellung der Abhängigkeit des

Grundstromes $I_o$ von der Temperatur,

Fig. 3   eine graphische Darstellung der Abhängigkeit der Anstiegszeit von der Betriebstemperatur,

Fig. 4   eine graphische Darstellung der Abhängigkeit des Stromverhältnisses $\frac{I}{I_o}$ vom Partialdruck des Äthanols.

In Fig. 1 ist ein Gassensor in einfachster Ausführung veranschaulicht. Das Substrat 1 trägt eine amorphe Metalloxid-Halbleiterdünnschicht 2. Mit 3 ist eine Kontaktschicht bezeichnet, die vorzugsweise aus Edelmetall bestehen kann.

Fig. 2 zeigt die Abhängigkeit des Grundstromes $I_o$ bei 5 Volt und 50 Hz an Luft von der Temperatur. Es sind die Grundströme $I_o$ verschiedener Schichten aus $SnO_2$ mit und ohne Dotierung aufgetragen. Wie der Vergleich zwischen undotierten amorphem $SnO_2$ und Cu- bzw. Zn-dotierten amorphem $SnO_2$ zeigt, ist es möglich, die Temperaturabhängigkeit der Leitfähigkeit in amorphem $SnO_2$ stark zu vermindern. Zum Vergleich wurde auch der Grundstrom einer kristallinen Schicht angeführt, der etwa drei Größenordnungen höher liegt. Die weitgehende Temperaturunabhängigkeit kommt in diesem Fall von einer derart hohen Elektronenkonzentration, daß Entartung eingetreten ist, d.h. die Fermi-Energie in einem besetzten Energieband liegt.

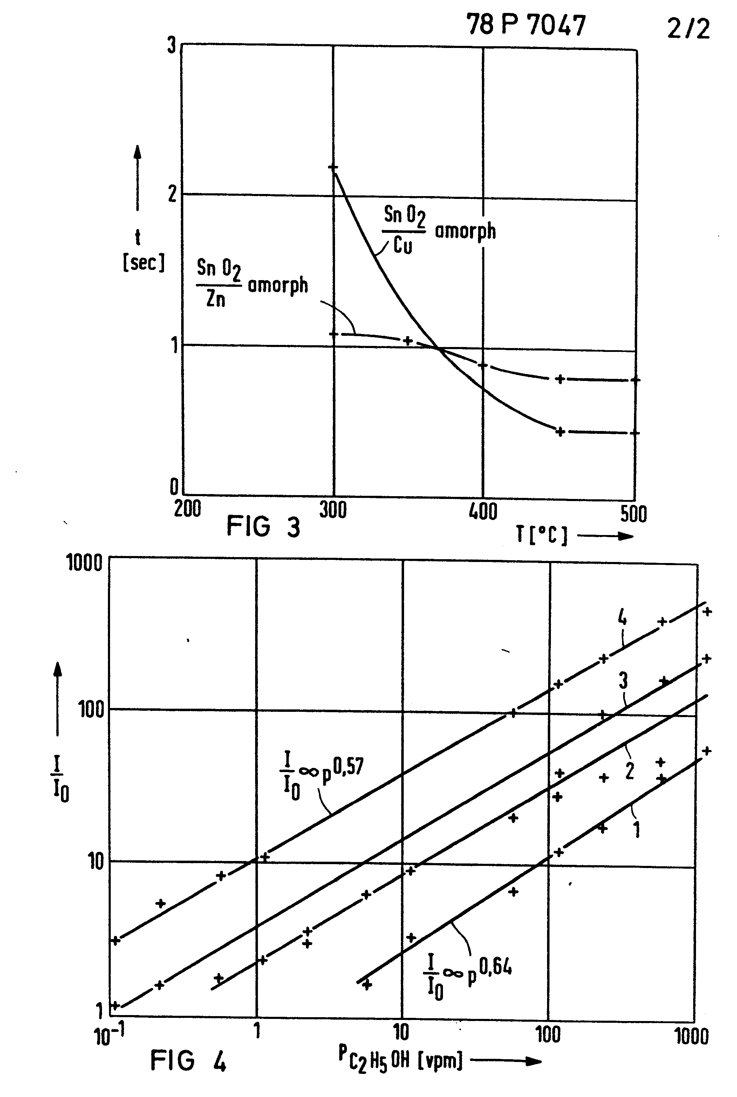

Fig. 3 zeigt die Abhängigkeit der Anstiegszeit von der Betriebstemperatur, gemessen bei 570 vpm Äthanol für zwei dotierte amorphe $SnO_2$-Schichten. Für die normale Betriebstemperatur liegen beide Werte unter 1 s.

Fig. 4 zeigt in doppelt logarithmischer Darstellung die Abhängigkeit des Stromverhätlnisses $\frac{I}{I}$ (d.h. I = Meßwert bei der jeweils angewendeten Alkoholkonzentration/$I_o$ =

- 6 - VPA **78** P 7047 EUR

Meßwert an reiner Luft) vom Partialdruck des Äthanols in Luft bei 400°C. Die Empfindlichkeit von Volumsproben für $SnO_2$ + ZnO-Pille (Kurve 1); $SnO_2$ : Cu auf Quarzglas (Kurve 2); $SnO_2$ : Zn auf $Al_2O_3$-Keramik (Kurve 3) und amorphen $SnO_2$-Dünnschichtsensoren (Kurve 4) ist aus den einzelnen Kurven ersichtlich.

Das Ergebnis zeigt, daß amorphe $SnO_2$-Schichten auf Quarzglas abgeschieden Alkohol bedeutend empfindlicher anzeigen als kompaktes $SnO_2$, z.B. in Form einer Pille oder eines Sinterkörpers.

Ein vpm Äthanol vermindert den Widerstand um den Faktor 10; Kompaktproben (Pillen) benötigen für die gleiche Widerstandsänderung mehr als 100 vpm Äthanol. Die Empfindlichkeit, d.h. die Konzentration, die noch festgestellt werden kann, ist für die Pille etwa 5 vpm und liegt für die amorphe $SnO_2$-Schicht auf Quarzglas abgeschieden unter $10^{-1}$.

9 Patentansprüche
4 Figuren

Patentansprüche

1. Gassensoren auf der Basis von Metalloxid-Halbleitern, d a d u r c h   g e k e n n z e i c h n e t , daß der Metalloxid-Halbleiter auf dem Substrat in Form einer amorphen Dünnschicht vorliegt.

2. Gassensoren nach Anspruch 1, d a d u r c h   g e -
k e n n z e i c h n e t , daß die Dicke der amorphen Dünnschicht zwischen 0,1 und 10 µm liegt.

3. Gassensoren nach Anspruch 1 und 2, g e k e n n -
z e i c h n e t   d u r c h Metalloxid-Halbleiter, die nur Kationen einer einzigen Art enthalten.

4. Gassensoren nach Anspruch 1 und 2, g e k e n n -
z e i c h n e t   d u r c h  Metalloxid-Halbleiter der allgemeinen Zusammensetzung $A_x B_y O_z$, worin A und B Elemente aus der Gruppe der Seltenen Erden, Übergangselemente und Edelmetalle und x, y und z die Anteile des jeweiligen Elementes sind.

5. Gassensoren nach Anspruch 1 bis 4, g e k e n n -
z e i c h n e t   d u r c h ein amorphes Substrat.

6. Gassensoren nach Anspruch 1 bis 4, g e k e n n -
z e i c h n e t   d u r c h  ein kristallines Substrat.

7. Gassensoren nach Anspruch 1 bis 6, g e k e n n -
z e i c h n e t   d u r c h  Metalloxid-Halbleiter, die mindestens ein Dotierungselement enthalten.

8. Gassensoren nach Anspruch 7, g e k e n n -
z e i c h n e t   d u r c h  Übergangsmetalle, Edelmetalle oder Seltene Erden als Dotierungselement.

9. Gassensoren nach den vorangegangenen Ansprüchen, g e k e n n z e i c h n e t d u r c h ein Substrat (1), eine amorphe Metalloxid-Halbleiterdünnschicht (2) und eine Kontaktschicht (3).

FIG 1

FIG 2

FIG 3

FIG 4

0005480

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 574 568 (PANA METRICS INC) <br> * Seite 2, Zeile 27 bis Seite 3, Zeile 16; Abbildung 1 * | 1-3, 6,9 |
| | -- | |
| | GB - A - 332 135 (W. LUBACH) <br> * Gänzlich * | 1,9 |
| | -- | |
| | FR - A - 2 079 823 (LABORATOIRE CENTRAL DES INDUSTRIES ELECTRIQUES) <br> * Seite 1, Zeile 38 bis Seite 4, Zeile 21; Abbildung 1 * | 1,9 |
| | -- | |
| | US - A - 3 345 596 (R.A. DELANEY) <br> * Spalte 3, Zeile 51 bis Spalte 5, Zeile 47; Abbildung 2 * | 1,3,9 |
| | -- | |
| | DE - A - 2 608 487 (NIPPON SOKEN INC.) <br> * Ansprüche 2,10-13 * | 1-3 |
| | -- | |
| | US - A - 4 001 757 (T. SATO) <br> * Spalte 1, Zeile 48 bis Spalte 2, Zeile 30; Abbildungen * | 1 |
| | -- | |
| | DE - A - 2 533 442 (HITACHI LTD.) <br> ./. | 1,4,7, 8 |

**KLASSIFIKATION DER ANMELDUNG (Int.Cl.²)**

G 01 N 27/12
H 01 L 7/00

**RECHERCHIERTE SACHGEBIETE (Int. Cl.²)**

G 01 N 27/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-07-1979 | DUCHATELLIER |

EPA form 1503.1 06.78

| | Europäisches Patentamt | **EUROPÄISCHER RECHERCHENBERICHT** | Nummer der Anmeldung<br>EP 79 10 1355 |

| | **EINSCHLÄGIGE DOKUMENTE** | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | * Anspruch 1 *<br><br>--<br><br><u>FR - A - 2 336 777</u> (MATSUSHITA ELECTRIC)<br>* Ansprüche 1-6 *<br><br>---- | 1,3,4,<br>7,8 | |
| | | | RECHERCHIERTE SACHGEBIETE (Int. Cl.²) |